# EUROPÄISCHE PATENTSCHRIFT

(11) **EP 0 525 594 B1**
(45) Veröffentlichungstag und Bekanntmachung des Hinweises auf die Patenterteilung: **20.09.1995**
(21) Anmeldenummer: 92112463.2
(22) Anmeldetag: 21.07.1992
(51) Int. Cl.: G01M 3/20, F17D 5/02, E02D 31/00

(54) **Verfahren und Einrichtung zur Überwachung eines Mediums mittels eines Sensorschlauches**
Method and apparatus for monitoring a medium by means of a sensing hose
Procédé et dispositif pour le monitorage d'un milieu au moyen d'un tuyau capteur

(30) Priorität: 02.08.1991 DE 4125741
(43) Veröffentlichungstag der Anmeldung: 03.02.1993
(73) Patentinhaber: SIEMENS AKTIENGESELLSCHAFT, 80333 München (DE)
(72) Erfinder: Jax, Peter, Dr., W-8520 Erlangen (DE); Leuker, Wilhelm, Dipl.-Phys., W-8551 Pinzberg (DE)

(56) Entgegenhaltungen:
- EP-A- 0 380 354
- DE-A- 3 604 600
- DE-C- 2 431 907
- US-A- 4 189 938
- US-A- 4 709 577

## Beschreibung

Die Erfindung betrifft ein Verfahren zur Überwachung eines Mediums, das in einer Komponente enthalten ist, mit einer von einem Transportmedium durchströmten Sammelleitung, die nahe des zu überwachenden Mediums verlegt ist, und mit einem an die Sammelleitung angeschlossenen Sensor, wobei dem Medium eine vom Sensor detektierbare Tracersubstanz zugeführt wird, für die die Sammelleitung durchlässig ist.

Die Erfindung betrifft auch eine Einrichtung zur Überwachung eines Mediums, das in einer Komponente enthalten ist, mit einer von einem Transportmedium durchströmten Sammelleitung, die nahe des zu überwachenden Mediums verlegt ist, mit einem an die Sammelleitung angeschlossenen Sensor und mit einem an die Komponente angeschlossenen Vorratsbehälter für eine Tracersubstanz, die vom Sensor detektierbar ist und für die die Sammelleitung durchlässig ist.

Aus der US-A-4,709,577 ist eine Einrichtung bekannt, mit der überwacht werden kann, ob ein Medium aus einer Komponente austritt. Die Komponente ist dabei ein Flüssigkeits- oder Gastank. Dem Inhalt dieses Tankes wird ein Tracer beigemischt. Falls ein Leck im Tank auftritt, gelangen nicht nur das Medium, sondern auch der Tracer aus dem Tank heraus. Da das Medium nicht detektierbar ist, wird das Leck im Tank dadurch festgestellt, daß der aus dem Tank ausgetretene Tracer durch eine Sammelleitung aufgenommen und in einem nachgeschalteten Sensor registriert wird.

Aus der DE 36 04 600 A1 ist ein Verfahren zur Leckerkundung an einer Hauptdichtung einer Deponie bekannt. Dazu wird eine Indikatorflüssigkeit in eine Hauptdrainschicht eingeleitet. Nach einem Zeitablauf wird dann untersucht, ob Spuren der Indikatorflüssigkeit bis zu einem bestimmten Punkt vorgedrungen sind. Dazu wird untersucht, ob die Indikatorflüssigkeit einen Kontrollstollen erreicht.

Aus dem Siemens-Prospekt "Deponie-Langzeitüberwachung mit LEOS", Bestell-Nr. A 19100-U653-A222, Juli 1990, ist eine Einrichtung zum Abdichten einer Mülldeponie sowie zur Leckage-Erkennung und -Ortung bekannt. Dabei ist vorgesehen, daß die Mülldeponie mit einer wasserdichten Folie, Dichtungsbahn oder "Abdichtung" (insbesondere aus Kunststoff) versehen ist. Diese Abdichtung kann unterhalb des Müllkörpers angeordnet sein (Basisabdichtung), damit keine Schadstoffe in das Grundwasser gelangen können. Die Abdichtung kann aber auch oberhalb des Müllkörpers verlegt sein (Oberflächenabdichtung), um das Eintreten von Regenwasser und damit das Auswaschen von Schadstoffen aus dem Müll zu verhindern. Um ein Leck, das heißt eine Schadstelle, in dieser Abdichtung frühzeitig zu erkennen, ist bei der bekannten Einrichtung die Verlegung von sogenannten Sensor- oder LEOS-Schläuchen vorgesehen, und zwar auf der vom Müllkörper abgewandten Seite der Abdichtung. LEOS steht hierbei für "Leckage-Erkennungs- und Ortungs-System". Die LEOS-Schläuche, die mäanderförmig verlegt, mit Luft gefüllt und deren Wandung für verschiedene, in der Deponie vorhandene Stoffe durchlässig sind, sind an ein zentrales Überwachungssystem angeschlossen. Bei einer Plazierung der Abdichtung unterhalb des Müllkörpers wird eine Schadstelle darin durch Detektion von im Sickerwasser gelösten Stoffen lokalisiert. Und bei einer Plazierung der Abdichtung oberhalb des Müllkörpers wird eine Schadstelle darin durch Detektion von aufsteigenden Faulgasen lokalisiert.

Ein LEOS-Schlauch sowie eine Einrichtung, die zu seinem Betrieb dient, sind aus der DE-PS 24 31 907 bekannt. Es handelt sich dabei um einen Schlauch, der für gewisse Stoffe durchlässig ist. Am einen Ende des Schlauches ist eine Pumpe angeordnet. Mit dieser Pumpe werden einzelne Volumina eines Transportmediums, zum Beispiel einzelne Gas- oder speziell Luftvolumina, in zeitlichen Abständen nacheinander durch den Schlauch hindurch befördert. Der Schlauch wird auf diese Weise in regelmäßigen zeitlichen Abständen, das heißt mit gleichbleibender Frequenz, jeweils für eine Zeit lang durchströmt. Am anderen Ende des Schlauches befinden sich für die zu detektierenden Stoffe, beispielsweise Schadstoffe, empfindliche Sensoren. Falls in die Umgebung des Schlauches ein solcher Stoff gelangt, dringt dieser Stoff in den Schlauch ein; er wird mit dem nächsten Pumpvorgang des Transportmediums zu den Sensoren gebracht. Da das Medium dabei mit einer bekannten Geschwindigkeit strömt, läßt sich aus der Differenz zwischen dem Einschaltzeitpunkt der Pumpe und dem Ansprechzeitpunkt der Sensoren genau der Ort bestimmen, an dem zwischen zwei Durchströmungsvorgängen der Stoff in den Schlauch gelangt ist. Außerdem läßt sich die Stoffmenge bestimmen.

In der nicht-vorveröffentlichten deutschen Patentanmeldung P 41 09 520.0 (Anmeldetag: 30.03.1991) wird ein Element zum Abdichten und Überwachen eines Körpers, insbesondere einer Abfalldeponie, mittels eines Kontrollraums offenbart. Diesem Element liegt die Erkenntnis zugrunde, daß es sinnvoll ist, einen verstärkten Schutz durch eine Doppelbarriere zu schaffen. Dies ist sowohl bei der Basisabdichtung als auch bei der Oberflächenabdichtung einer Deponie zweckmäßig. Das Element beruht weiter auf der Überlegung, daß es auch sinnvoll ist, die Ausgestaltung so vorzunehmen, daß meßtechnisch zu erfassen ist, ob die eine oder andere Barriere ein Leck aufweist und wo dieses Leck gelegen ist. Das Element umfaßt dazu zwei Abdichtungen, die durch Stützelemente voneinander beabstandet angeordnet sind. Dabei ist mindestens ein Kanal zwischen den Abdichtungen und den Stützelementen gebildet, der eine Eintrittsöffnung und eine Austrittsöffnung für ein Medium, wie zum Beispiel Luft, aufweist. Dieser Kanal ist dabei als permeabler LEOS-Schlauch ausgebildet, oder er beinhaltet einen solchen LEOS-Schlauch. An die Austrittsöffnung ist mindestens ein Sensor, zum Beispiel ein Sensor für Flüssigkeitsdampf und zusätzlich ein Sensor für Gas, anschließbar. Die beiden Abdichtungen sind unter Freilassung der Eintritts- und Austrittsöffnung des Kanals an ihren Rändern dicht miteinander verbunden, so daß ein Kontrollraum gebildet ist. Und die Stützelemente bestehen aus einem strömungsdurchlässigen, aber strömungsbehindernden (weitgehend homogenen) Material.

Das LEOS-Meßverfahren setzt voraus, daß der im Detektor (Sensor) zu detektierende Stoff in ausreichender Konzentration in den Sensorschlauch eindiffundieren kann, und daß er nach dem Transport durch das Transportmedium vom Detektor (Sensor) des Meßsystems angezeigt wird. Dies ist nicht gegeben bei einem Stoff mit kleiner Diffusion. Dies ist auch nicht gegeben bei einer wäßrigen Substanz, also beispielsweise bei der Überwachung von Wasser in Fernwärmeleitungen oder in ähnlichen Wassernetzen, bei denen ausschließlich Wasserdampf in den permeablen Schlauch eindiffundiert. Im letzteren Fall ist wegen der normalen Bodenfeuchte ein nicht kontrollierbarer Untergrundeffekt vorhanden, so daß keine ausreichende Nachweissicherheit im Leckage-Fall gegeben ist. Außerdem gibt es zu überwachende Medien, wie z. B. CO₂ und H₂O, die im Leckagefall mit den üblichen LEOS-Sensoren nicht oder nur ungenügend angezeigt werden.

Der Erfindung lag die Aufgabe zugrunde, das Verfahren der eingangs genannten Art so auszugestalten, daß es im Leckagefall ein beliebiges zu überwachendes Medium anzeigt. Außerdem soll eine Einrichtung der eingangs genannten Art so ausgestaltet werden, daß im Leckagefall ein beliebiges zu überwachendes Medium angezeigt werden kann.

Die zuerst genannte Aufgabe wird gemäß der Erfindung dadurch gelöst, daß die Komponente ein Müllkörper ist, der oben und/oder unten mit einer Abdichtung versehen ist, daß die Tracersubstanz in eine Schicht nahe der Abdichtung eingeleitet und damit dem zu überwachenden Medium zugeführt wird, daß die Sammelleitung ein Sensorschlauch ist und daß die Tracersubstanz bezüglich des Sensorschlauches diffusionsfähig ist.

Diese diffusionsfähige und detektierbare Tracersubstanz kann ein Tracergas, beispielsweise ein Kohlenwasserstoff, sein. Dieser Kohlenwasserstoff kann Methan sein. Das Tracergas kann aber auch Wasserstoff sein. Zum Nachweis dieser Stoffe stehen geeignete Detektoren zur Verfügung. Wasserstoff dringt auch relativ einfach in die bekannten LEOS- oder Sensorschläuche ein.

Die als zweite genannte Aufgabe wird gemäß der Erfindung dadurch gelost, daß die Komponente ein Müllkörper ist, der oben und/oder unten mit einer Abdichtung versehen ist, daß die Tracersubstanz in eine Schicht nahe der Abdichtung einleitbar und somit dem zu überwachenden Medium (m) zuführbar ist und daß die Sammelleitung ein Sensorschlauch ist, bezüglich dessen die Tracersubstanz diffusionsfähig ist.

Zum Einleiten ist beispielsweise eine Rohrleitung vorgesehen.

Mit dem Verfahren und der Einrichtung nach der Erfindung wird der Vorteil erzielt, daß auch Medien, die sonst durch übliche Sensortechnik nicht detektierbar wären, überwacht werden können. Das ist unter anderem dadurch möglich, daß eine Tracersubstanz in eine Schicht eingeleitet wird, die in der Nähe der Abdichtung liegt. Bei einem Leck in der Abdichtung gelangt dann die Tracersubstanz zum Sensorschlauch. Vom Sensorschlauch wird die Tracersubstanz besser als das Medium aufgenommen.

Ausführungsbeispiele der Erfindung werden im folgenden anhand von zwei Figuren naher erläutert.

Figur 1 zeigt eine Einrichtung zur Überwachung eines Mediums, bei dem eine Rohrleitung verwendet wird, die gleichzeitig mit einem zu übetwachenden Medium und einer Tracersubstanz beschickt wird. Die in Figur 1 gezeigte Einrichtung in der dargestellten Form fallt nicht unter den Schutzumfang der Patentansprüche.

Figur 2 zeigt eine Mülldeponie mit Überwachungseinrichtung und Zuführung einer Tracersubstanz (Tracergas) nach einem Ausführungsbeispiel der Erfindung.

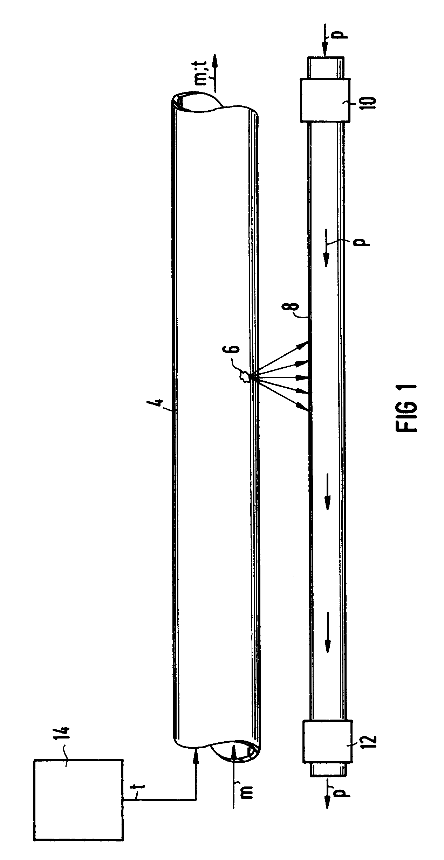

Nach Figur 1 wird ein zu überwachendes Medium m, beispielsweise eine nach dem LEOS-Prinzip nicht detektierbare, weil schlecht diffundierende Flüssigkeit wie eine Lauge, eine Säure, Wasser oder Schweröl (also Flüssigkeiten niederen Dampfdrucks), in einer Rohrleitung 4 geführt. Mittels der dargestellten Einrichtung wird hierbei überwacht, ob die Rohrleitung 4 möglicherweise ein Leck 6 aufweist, aus dem das Medium m in die Umgebung austritt. Die dargestellte Überwachungseinrichtung umfaßt im wesentlichen einen parallel zur Rohrleitung 4 verlegten Sensorschlauch 8, eine Pumpe 10 an einem Ende des Sensorschlauches 8 und einen Detektor oder Sensor 12 für einen nachzuweisenden Stoff am anderen Ende. Mit Hilfe der Pumpe 10 wird ein Transportmedium p, wie beispielsweise gereinigte Luft, jeweils für eine gewisse Zeit lang durch den Sensorschlauch 8 gepumpt. Rohrleitung 4 und Sensorschlauch 8 können beispielsweise im Erdreich vergraben sein. Statt der Rohrleitung 4 kann auch ein Behälter das Medium m enthalten. Auch andere Komponenten zur Aufnahme des Mediums m sind denkbar.

Dem durch die Rohrleitung 4 geschickten Medium m ist eine Tracersubstanz t zugesetzt. Diese Substanz t kann also vorab bereits im Medium m enthalten sein. Sie kann auch permanent von einem Vorratsbehälter 14 zugeführt werden.

Die Tracersubstanz t kann im Leckagefall in den Schlauch 8 eindiffundieren. Sie wird vom Transportmedium p mitgenommen und vom Detektor 12 detektiert. Dieser Detektor 12 spricht also speziell auf das Tracermedium t an. Das Medium t kann insbesondere Wasserstoff (H₂) oder ein Kohlenwasserstoff wie Methan (CH₄) sein. Solche Gase sind mit den üblichen LEOS-Detektoren, die auf Verbrennung beruhen, einfach nachzuweisen.

Der Sensorschlauch 8 kann in bekannter Weise als LEOS-Schlauch ausgebildet sein. Er kann also beispielsweise ein Drahtgeflecht umfassen. Je nach Anzahl der nachzuweisenden Substanzen oder Stoffe wird man einen oder mehrere Detektoren 12 vorsehen.

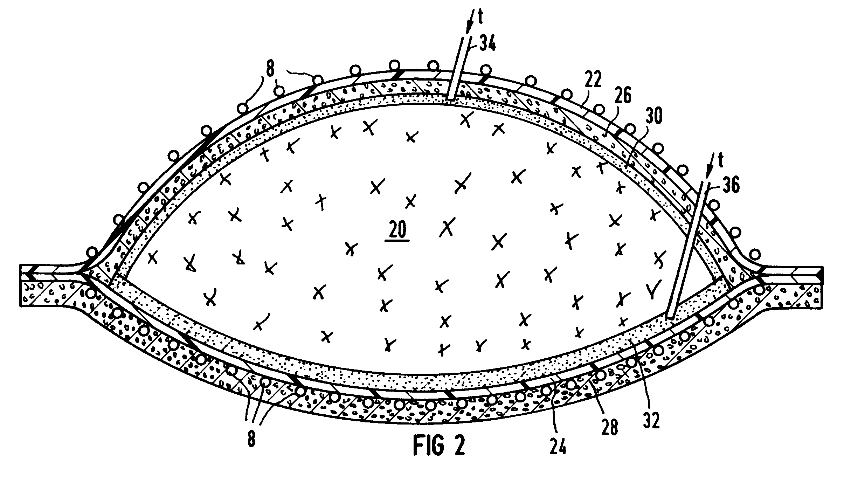

Nach Figur 2 ist eine Mülldeponie mit einem Müllkörper 20 als Medium nach oben und nach unten durch eine gemäß der Erfindung ausgestaltete Einrichtung abgedichtet und überwacht. Die vorangehend genannte Komponente ist hier also der Müllkörper 20. Die Einrichtung umfaßt ein oberes Feld und ein unteres Feld jeweils aus kontrollierbaren Einzel- oder Doppeldichtungen 22 bzw. 24. Jedem Feld ist dabei eine Anzahl von Sensorschläuchen 8 zugeordnet, von denen die oberen und die unteren Schläuche 8 jeweils an getrennte (nicht dargestellte) Gasdetektoren angeschlossen sind. Mit dem oberen Feld wird das Austreten von Deponiegas aus dem Müllkörper 20 nach oben überwacht, und eine entsprechende Leckstelle wird lokalisiert. Mit dem unteren Feld wird das Austreten von Deponiegas oder Feuchtigkeit aus dem Müllkörper 20 nach unten überwacht, und ein entsprechendes Leck wird angezeigt.

Jedes Feld kann dabei zwei Barrieren für Gas und Feuchtigkeit umfassen. Die Sensorschläuche sind dann - abweichend von der Darstellung in Figur 2 - innerhalb dieser beiden Barrieren angeordnet.

Die obere Abdichtung 22 liegt auf einer mineralischen Dichtung 26. Entsprechend ist eine mineralische Dichtung 28 im Bereich der unteren Abdichtung 24 vorgesehen. Der oberen Abdichtung 22 ist darüber hinaus eine Drainage-Schicht 30 zugeordnet. Entsprechend ist auch der unteren Abdichtung 24 eine Drainage-Schicht 32 zugeordnet. Diese Drainage-Schichten 30, 32 lassen eine flächige Ausbreitung von Tracergas t zu, welches in die besagten Schichten 30, 32 mittels Rohrleitungen 36 bzw. 36 eingeleitet wird. Die Drainage-Schichten 30, 32 sorgen für eine fast gleichmäßige Verteilung der zugeleiteten Tracersubstanz t um den Müllkörper herum. Im Leckagefall wird dieses Tracergas t somit durch das (nicht gezeigte) Leck in der Abdichtung 22 oder 24 mitgenommen und gelangt durch Diffusion in den nächstgelegenen Sensorschlauch 8, in dem es zum zugehörigen Sensor mitgeführt und schließlich zur Anzeige gebracht wird.

Aus Figur 2 wird ersichtlich, daß die bewußte Zuführung von Tracergas t in den Müllkörper 20 eine Anzeige auch dann im Leckfall ermöglicht, wenn kein nachweisbares Deponiegas wie Methan entsteht, also beispielsweise wenn die Mülldeponie 20 im wesentlichen Schwermetalle oder einen anderen anorganischen Schlamm enthält.

## Patentansprüche

1. Verfahren zur Überwachung eines Mediums (m), das in einer Komponente enthalten ist, mit einer von einem Transportmedium (p) durchströmten Sammelleitung, die nahe des zu überwachenden Mediums (m) verlegt ist, und mit einem an die Sammelleitung angeschlossenen Sensor (12), wobei dem Medium (m) eine vom Sensor (12) detektierbare Tracersubstanz (t) zugeführt wird, für die die Sammelleitung durchlässig ist,
**dadurch gekennzeichnet,** daß die Komponente ein Müllkörper (20) ist, der oben und/oder unten mit einer Abdichtung (22, 24) versehen ist,
daß die Tracersubstanz (t) in eine Schicht (30, 32) nahe der Abdichtung (22, 24) eingeleitet und damit dem zu überwachenden Medium (m) zugeführt wird,
daß die Sammelleitung ein Sensorschlauch (8) ist und daß die Tracersubstanz (t) bezüglich des Sensorschlauches (8) diffusionsfähig ist.

2. Verfahren nach Anspruch 1, **dadurch gekennzeichnet,** daß die Tracersubstanz (t) ein Tracergas ist.

3. Verfahren nach Anspruch 2, **dadurch gekennzeichnet,** daß das Tracergas ein Kohlenwasserstoff ist.

4. Verfahren nach Anspruch 3, **dadurch gekennzeichnet,** daß der Kohlenwasserstoff Methan ist.

5. Verfahren nach Anspruch 2, **dadurch gekennzeichnet,** daß das Tracergas Wasserstoff ist.

6. Einrichtung zur Überwachung eines Mediums (m), das in einer Komponente enthalten ist, mit einer von einem Transportmedium (p) durchströmten Sammelleitung, die nahe des zu überwachenden Mediums (m) verlegt ist, mit einem an die Sammelleitung angeschlossenen Sensor (12) und mit einem an die Komponente angeschlossenen Vorratsbehälter (14) für eine Tracersubstanz (t), die vom Sensor (12) detektierbar ist und für die die Sammelleitung durchlässig ist,
**dadurch gekennzeichnet,** daß die Komponente ein Müllkörper (20) ist, der oben und/oder unten mit einer Abdichtung (22, 24) versehen ist,
daß die Tracersubstanz (t) in eine Schicht (30, 32) nahe der Abdichtung (22, 24) einleitbar und somit dem zu überwachenden Medium (m) zuführbar ist und
daß die Sammelleitung ein Sensorschlauch (8) ist, bezüglich dessen die Tracersubstanz (t) diffusionsfähig ist.

7. Einrichtung nach Anspruch 6,
**dadurch gekennzeichnet,** daß zum Einleiten eine Rohrleitung (34, 36) vorgesehen ist.

## Claims

1. Method for monitoring a medium (m) contained in a component, comprising a collecting pipe through which a transport medium (p) flows, which is laid near the medium (m) to be monitored, and a sensor (12) connected to the collecting pipe, a tracer substance (t) being supplied to the medium (m) which is detectable by the sensor (12) and to which the collecting pipe is permeable,
characterized in that the component is a refuse body (20) which is provided at the top and/or bottom with a seal (22, 24),
in that the tracer substance (t) is introduced into a layer (20, 32) close to the seal (22, 24) and is thereby supplied to the medium (m) to be monitored,
in that the collecting pipe is a sensor hose (8) and in that the tracer substance (t) is diffusible with respect to the sensor hose (8).

2. Method according to claim 1, characterized in that the tracer substance (t) is a tracer gas.

3. Method according to claim 2, characterized in that the tracer gas is a hydrocarbon.

4. Method according to claim 3, characterized in that the hydrocarbon is methane.

5. Method according to claim 2, characterized in that the tracer gas is hydrogen.

6. Apparatus for monitoring a medium (m) contained in a component, comprising a collecting pipe through which a transport medium (p) flows, which is laid near the medium (m) to be monitored, a sensor (12) connected to the collecting pipe, and a supply container (14) connected to the component for a tracer substance (t) which is detectable by the sensor (12) and to which the collecting pipe is permeable,
characterized in that the component is a refuse body (20) which is provided at the top and/or bottom with a seal (22, 24),
in that the tracer substance (t) may be introduced into a layer (30, 32) close to the seal (22, 24) and may thereby be supplied to the medium (m) to be monitored, and in that the collecting pipe is a sensor hose (8) with respect to which the tracer substance (t) is diffusible.

7. Apparatus according to claim 6, characterized in that a pipeline (34, 36) is provided for introducing the tracer substance.

## Revendications

1. Procédé pour contrôler un fluide (m) qui est contenu dans un composant, par une conduite de collecte qui est parcourue par un fluide de transport (p) et qui est disposée à proximité du fluide à contrôler (m), et par un capteur (12) qui est raccordé à la conduite de collecte, une substance traçante (t), qui peut être détectée par le capteur (12) et pour laquelle la conduite de collecte est perméable, étant introduite dans le fluide (m),
caractérisé par le fait
que le composant est un volume d'ordures (20), qui comporte, à sa partie supérieure et/ou à sa partie inférieure, une enveloppe d'étanchéité (22,24),
qu'on introduit la substance traçante (t) dans une couche (30, 32) à proximité de l'enveloppe d'étanchéité (22,24) et qu'on l'applique par conséquent au fluide (m) à contrôler, que la conduite de collecte est un tuyau de détection (8), et que la substance traçante (t) est susceptible de diffuser dans le tuyau de détection (8).

2. Procédé suivant la revendication 1, caractérisé par le fait que la substance traçante (t) est un gaz traçant.

3. Procédé suivant la revendication 2, caractérisé par le fait que le gaz traçant est un hydrocarbure.

4. Procédé suivant la revendication 3, caractérisé par le fait que l'hydrocarbure est du méthane.

5. Procédé suivant la revendication 2, caractérisé par le fait que le gaz traçant est de l'hydrogène.

6. Dispositif pour contrôler un fluide (m) qui est contenu dans un composant, comportant une conduite de collecte qui est parcourue par un fluide de transport (p) et qui est disposée à proximité du fluide à contrôler (m), un capteur (12) raccordé à la conduite de collecte et un réservoir (14), raccordé au composant, d'une substance traçante (t), qui peut être détectée par le capteur (12) et pour laquelle la conduite de collecte est perméable,
caractérisé par le fait
que le composant est un volume d'ordures (20), qui comporte, à sa partie supérieure et/ou à sa partie inférieure, une enveloppe d'étanchéité (22,24),
la substance traçante (t) peut être introduite dans une couche (30, 32) à proximité de l'enveloppe d'étanchéité (22,24) et peut être appliquée par conséquent au fluide (m) à contrôler,
que la conduite de collecte est un tuyau de détection (8), à travers lequel la substance traçante (t) peut diffuser.

7. Dispositif suivant la revendication 6, caractérisé par le fait qu'une conduite tubulaire (34,36) est prévue pour l'introduction.
